# EUROPEAN PATENT SPECIFICATION

(11) **EP 2 529 628 B1**
(45) Date of publication and mention of the grant of the patent: **14.09.2016**
(21) Application number: 11168128.4
(22) Date of filing: 30.05.2011
(51) Int. Cl.: A01P 7/04, A01P 7/02, A01P 17/00, A01N 25/34, A01N 37/18, A01N 47/22, A01N 53/00, A01N 57/14, A01K 27/00, A61K 47/00

(54) **A controlled-release pesticide system for a composition**
Pestizidsystem mit gesteuerter Freisetzung für eine Zusammensetzung
Système pesticide à libération contrôlée pour une composition

(43) Date of publication of application: 05.12.2012
(73) Proprietor: Konig do Brasil Ltda., 06514-005 Santana da Parnaiba - Sao Paolo (BR)
(72) Inventor: Taroni, Elbio Humerto, 06514005 Santana da Parnaíba - Sao Paolo (BR)
(74) Representative: Isern-Jara, Nuria

(56) References cited:
- WO-A1-98/57540
- WO-A2-2004/089083
- DE-A1- 2 932 920
- US-A- 3 852 416

## Description

### Field of the Invention

The present invention relates to a controlled-release pesticide system. This composition acts as an insecticide for controlling fleas and ticks, repelling and fighting phlebotominae vectors of leishmaniasis and mosquito vectors of dirofilariasis. To obtain said controlled-release system with the active ingredients having the aforementioned pesticide properties, it was necessary to overcome several drawbacks.

In preparing the composition, the active component parts were mixed with the polymer polyvinyl chloride and with this preparation collars were injected and molded to be used in animals as a controlled-release matrix.

Drawbacks occurring when a plasticizer is mixed with a polymer and the active ingredients were thereby eliminated; these drawbacks are manifested as the incomplete release of the active ingredients.

### State of the Art

In the state of the arte several US patent documents are known in which the active ingredients with pesticide properties have been mixed and are combined with polymers, and serve for manufacturing bands, collars for animals or other controlled-release elements, for example, US patent numbers 3,318,769; 3,852,416; 4,150,109 and 6,413,532.Specifically, in the document US3852416 is disclosed a PVC - based collar comprising propoxur as active.

Also other documents relating to different plastic laminar materials are known, such as in patent application E92111619 relating to insecticidal support tablets, for example document W9303154EP providing a collar-type device or a cattle tag which can be placed on the ear, containing a fatty acid gel, organic solvent in silicon and an active ingredient protecting the animal against one or more arthropod pests, such as document E99305998. In the case of patent application WO98/57540 is disclosed a PVC - based collar comprising deltamethrin (active) and triphenyl phosphate, furthermore said collar comprises phtalic esther as a plastisizer. This collar is intended to pest control of phlebotomine sandflies and canine leishmaniasis. In the document WO2004089083 is disclosed a PVC - based collar comprising deltamethrin (active) and isodiphenyl phosphate (IDDP) as carrier for said active, reducing the skin irritation caused by the active.

All these documents have the mentioned drawbacks and others, such as the fact that the polymer and active
used for the desired purpose. Also the drawback occurring with the active ingredient when the mixture is not uniform, which translates into a less effective use of the active ingredient. These systems use a vinyl polymer, such as poly(vinyl chloride) (PVC), to which a highly miscible plasticizer and triphenyl phosphate (TPP), used as a carrier for the active ingredient, are added.

### Summary of the invention

The purpose of the invention is to provide a controlled-release pesticide system avoiding the above mentioned drawbacks.

This objective is achieved by means of a controlled-release pesticide system according to the characterising clause of claim 1.

The present invention overcomes the aforementioned drawbacks of the mixtures (systems) of the prior art. The inventors have surprisingly found that a mixture of triphenyl phosphate and cresyl diphenyl phosphate considerably favors the release of the active ingredients.

The application provides a controlled-release pesticide system of a mixture of active ingredients to fight against parasites based on a polymer matrix, being more effective in releasing the active ingredients than the aforementioned mixtures of the prior art. Furthermore, the pesticide systems of the present invention have a uniform rate of release of the active ingredient making the use of the active ingredient more efficient and effective.

Further advantageous features of the invention are disclosed in the dependent claims.

### Detailed Description of Embodiments of the Invention

A controlled-release pesticide system for a composition containing deltamethrin, propoxur and an insect repellant is for repelling or controlling fleas and ticks; and the phlebotominae vectors of leishmaniasis and mosquito vectors of dirofilariasis and acting as a pesticide system itself.

The system can be produced as a solid polymer system for the release of active ingredients, the system comprising a vinyl polymer, a synergistic mixture of plasticizers and a combination of active ingredients for controlling pests. The improvement comprises not only the combination of new of drugs but also the complete release of the active ingredients.

More particularly, the system based on a polymer matrix comprises as ingredients a vinyl polymer, a liquid plasticizer miscible with said polymer, the amounts of the plasticizer being as great as possible so that the plasticizer and polymer mixture always remains dry and fluid, and a mixture of triphenyl phosphate and cresyl diphenyl phosphate provided in an amount and optimal ratio such as to serve as a carrier for said active ingredients.

Other elements making up the invention is propoxur, acting as an external antiparasitic agent being suitable against fleas, ticks and/or lice infestation. The susceptible etiological agents are fleas: *Ctenocephalides felis, Ctenocephalides canis, Pulex irritans* and *Tunga penetrans.* Ticks: *Riphicephalus sanguineus, Amblyomma maculatum, Amblyoma fossum* and *Amblyoma neumanni.* Lice: *Trichodectes canis, Heterodoxus spiniger, Linognathus setosus and Felicola subrostratus.*

Propoxur is a carbamate which binds to acetylcholinesterase, inactivating it. Said inactivation therefore causes an increase of acetylcholine at the level of muscarinic and nicotinic receptors of the autonomic nervous system. At appropriate doses, the mentioned effect takes place on the acetylcholinesterase of the insects, thus causing their death by paralysis.

It has been found that the percutaneous absorption and metabolism of propoxur in a bicompartmental organ culture model at non-toxic concentrations of propoxur topically applied on discs of skin, porcine, rabbit and human origin; the rates of permeability in the human and rabbit skin were comparable, whereas the porcine skin was twice as permeable, also the cutaneous tissue of the three species has the same capacity for metabolizing propoxur. The propoxur hydrolysis produces 2-isopropoxyphenol (IPP) followed by phase II conjugation reactions. The type of conjugation of the IPP seems to be species-specific. In the porcine tissue cultures, glucuronides and sulfates were detected in equal amounts, whereas only conjugation with sulfates was observed in human skin. In the rabbit cutaneous tissue, the main conjugation pathway was established by means of glucuronidation followed by smaller amounts of sulfates and by an unidentified metabolite. The percentage of propoxur metabolized in rabbit skin was not affected by the doses in the range of 25-200 micrograms/cm². In contrast, the metabolism in human skin was virtually saturated at 100 micrograms/cm².

Another one of the active ingredients is ethyl butylacetylaminopropionate, being a very effective repellant in stinging and biting insects and arthropods. Mosquitoes *(Anopheles gambiae* and *funestus, Aedes aegypti* and *albopictus, Culex pipiens* and *Culex quinquefasciatus).* Phlebotominae *(Lutzomyia longipalpis and aragaoi, Lutzomyia cruzi, Lutzomyia intermedia, Lutzomyia migonei, Lutzomyia vvhitmani and shanonni, Lutzomyia tejadai, Lutzomyia vexator).* Lice, horseflies, ticks, blackflies, stable flies, wasps, bees, house fly.

Therefore, the system of the invention is formed with the following components:
1- PVC resin;
2- Pyrethroid;
3- Propoxur;
4- Ethyl butylacetylaminopropionate;
5- Isooctyl phthalate;
6- Cresyl diphenyl phosphate
7- Triphenyl phosphate

As an object of the present invention, the controlled-release system is in most cases a dog collar injected with deltamethrin, propoxur and ethyl butylacetylaminopropionate, with the following drugs and in the following proportions with the percentage values:

| Drug | % |
|---|---|
| PVC resin | 40-50 |
| Ethyl butylacetylaminopropionate | 0.1-5 |
| Pyrethroid | 1-10 |
| Propoxur | 5-20 |
| Isooctyl phthalate | 5-15 |
| Cresyl diphenyl phosphate | 5-30 |
| Triphenyl phosphate | 5-30 |

The active ingredient pyrethroid can be chosen from the following compounds: deltamethrin, acrinathrin, tralomethrin, permethrin, cypermethrin, alphamethrin, cyhalothrin, the preferred pyrethroid being deltamethrin.

Deltamethrin is one of the most widely used components in insecticides worldwide, and it is a member of one of the safe insecticide families, the synthetic pyrethroids.

Deltamethrin is used both in agriculture and in veterinary medicine, and even in insect domestic control. Deltamethrin has been used to prevent the spread of diseases transmitted by mosquitoes and ticks in dogs, rodents and other digging animals. It is effective in eliminating a wide variety of pests from human homes, especially spiders, fleas, tics, cockroaches, bedbugs, ants and mosquitoes, among others.

Deltamethrin plays a very important role in the control of vectors of various diseases, such as malaria and leishmaniasis. It is used in the manufacture of mosquito nets with long-lasting insecticides. It is used in the control of different vectors, including: Mosquitoes *(Anopheles Spp, anopheles gambiae* and *funestus, Aedes aegypti and albopictus, Culex pipiens* and *Culex quinquefasciatus).* Phlebotominae *(Lutzomyia aragaoi, Lutzomyia cruzi, Lutzomyia intermedia, Lutzomyia longipalpis, Lutzomyia migonei, Lutzomyia vvhitmani and shanonni, Lutzomyia tejadai, Lutzomyia vexator).* Lice, horseflies, ticks, blackflies, stable flies, wasps, bees, house flies. It is the most widely used pyrethroid and it can be used together with other insecticides.

The World Health Organization (WHO) has detected an increase of leishmaniasis. The WHO report recommends that dogs wear a collar impregnated with deltamethrin to avoid an infection and contact between phlebotominae and reservoir dogs, thereby reducing the risk of infection in humans and in canines.

The repellant system according to the invention is applicable particularly to the control of acaridae, for example, ticks, scabies mites, fly larvae, insects such as lice, bedbugs and different types of biting and stinging insects of the flebotominae type and which are involved in transmitting canine leishmaniasis that is caused by an insect bite and can be transmitted to humans, this disease is very common in countries in tropical and subtropical areas. Another characteristic application of the invention is protection against insects, mosquitoes, ticks, lice and other infectioncarrying insects; in the best case scenario, these insects being a bother, and in a worst-case scenario, being the vectors of disease such as malaria and yellow fever. The territory of arthropods is dangerous such as the Asian tiger mosquito *(Aedes albopictus),* which can be combated with the feature of the invention of ethyl butylacetylaminopropionate, with efficacy and a considerably safe toxicological profile.

### Example 1

**Amount: 100 Kg**

| Drug | Kg |
|---|---|
| PVC resin | 43 |
| Ethyl butylacetylaminopropionate | 1.0 |
| Deltamethrin (#) | 4.0 |
| Propoxur (#) | 10.0 |
| Isooctyl phthalate | 7.0 |
| Cresyl diphenyl phosphate | 15 |
| Triphenyl phosphate | 20 |

| | |
|---|---|
| (#) Quantity for 100 kg calculated for the drug at 100% | |

The PVC is placed in the helical mixer and the mixer casing is heated up to 80°C. The isooctyl phthalate is added, keeping the temperature at 80°C, then the cresyl diphenyl phosphate is added and mixed until perfectly homogenized. Then the triphenyl phosphate is added and mixed until completely homogenized. The deltamethrin is added to this mixture little by little, also at 80°C with stirring. Then the propoxur is added at 80°C, and it is stirred until completely homogenized. The repellant ethyl butylacetylaminopropionate is added and stirred. Once all the ingredients are added in the mixer, it is necessary to continue mixing until the solid flows freely. The last step is to inject the collars in the corresponding size.

To check the effectiveness, migration assay of deltamethrin, propoxur, ethyl butylacetylaminopropionate, triphenyl phosphate and cresyl diphenyl phosphate was conducted on a sample of the collar of the invention and a sample of the competitor's collar, obtaining the following comparative results.

**Table of active ingredient concentration in the collars**

| | Deltamethrin | Propoxur | Ethyl buty-lacetylamino-propionate | Triphenyl phosphate | Cresyl diphenyl phosphate |
|---|---|---|---|---|---|
| COLLAR | 4.0% | 10% | 1% | 20% | 15% |
| COMPETITOR'S COLLAR | 4.0% | - | - | 30% | - |

The method used for the measurement was the following:
The surface of each collar was swabbed at different times, then the swab content is dissolved in a solvent and this solution is evaluated against a standard of each substance by HPLC.

The assay consisted of measuring the active ingredient concentration on the surface of the collar. The active ingredient concentration was always higher in the collar of the invention with respect to the competitor's collar. In the case of the triphenyl phosphate and cresyl diphenyl phosphate mixture, it was observed that the ratio of both favored the release so as to maintain a high concentration of deltamethrin and propoxur on the surface of the collar, carrying out its function of carrying the active ingredient to the surface.

**COMPETITOR'S COLLAR**

| | Deltamethrin mg/100 cm² | Triphenyl phosphate mg/100 cm² |
|---|---|---|
| INITIAL | 4.85 | 44.19 |
| 3 MONTHS | 4.70 | 42.0 |
| 6 MONTHS | 4.75 | 43.5 |
| 12 MONTHS | 4.52 | 40.56 |
| 18 MONTHS | 4.35 | 38.82 |
| 24 MONTHS | 4.09 | 37.55 |

**COLLAR of the invention**

| | Deltamethrin mg/100 cm² | Propoxur mg/100 cm² | Ethyl buty-lacetylamino-propionate, mg/100 cm² | Triphenyl phosphate mg/100 cm² | Cresyl diphenyl phosphate mg/100 cm² |
|---|---|---|---|---|---|
| INITIAL | 7.78 | 180.08 | 3.11 | 36.49 | 12.74 |
| 3 MONTHS | 7.65 | 178.55 | 3.05 | 35.42 | 12.05 |
| 6 MONTHS | 7.72 | 179.46 | 3.09 | 36.55 | 12.43 |
| 12 MONTHS | 7.66 | 179.22 | 3.06 | 36.14 | 12.29 |
| 18 MONTHS | 7.59 | 178.99 | 3.10 | 35.85 | 12.19 |
| 24 MONTHS | 7.42 | 177.54 | 3.08 | 35.05 | 11.92 |

Due to the fact that the collars prevent contact between the dogs and the phlebotominae, it is probable that its universal use would prevent the circulation of the parasite, and the disease in humans could disappear because dogs are the largest known reservoir for the parasite. The following examples illustrate the invention and show how it can be implemented.

### Example 2

### Method of preparation:

Another preferred embodiment of the present invention is to add a dry mixture of resin, one or several highly miscible plasticizers, such as dioctyl adipate, to poly(vinyl chloride) or another vinyl polymer. The amount of plasticizers used is the maximum amount which allows the mixture to remain dry and fluid. The active ingredients are mixed separately with the carrying mixture formed by triphenyl phosphate and cresyl diphenyl phosphate, at a predetermined proportion, to form the carrier-Al mixture. This mixture is then melted and homogenized by means of careful kneading, and it is cooled to yield a solid that is ground into small particles.

**Following results were obtained:**

| Parameter | Specification |
|---|---|
| Deltamethrin | 4% ± 7.3% |
| Propoxur | 10% +/-5.8% |
| Ethyl butylacetylaminopropionate | 1.0% +/- 15% |
| Appearance | Colored strip with determined length and weight |

| SIZE | WEIGHT | LENGTH |
|---|---|---|
| SMALL AND MEDIUMSIZED DOGS | 26-30g | 47-49 cm |
| LARGE | 44-48 g | 71-73 cm |

### Examples of obtained results:

### 1- Comparative efficacy of collars injected with 10 g% propoxur, 4 g% deltamethrin and 1 g% ethyl butylacetylaminopropionate versus collars injected with 4 g% del-tamethrin applied a canines experimentally infested with Ctenocephalides felis.

The efficacy of two ectoparasitic collars was compared in the canine species. 30 animals of both sexes, mixed breeds, of different ages that were experimentally infested with 50 unfed adult fleas *(Ctenocephalides felis)* were used. The first ectoparasite count was conducted by means of the combing technique after 24 hours. The canines were randomly divided into 3 groups of 10 animals each: group A was treated with a plastic matrix collar injected with 10 g% propoxur, 4 g% deltamethrin and 1 g% ethyl butylacetylaminopropionate; group B was treated with a plastic matrix collar injected with 4% deltamethrin and group C was given a plastic matrix collar without insecticide (control). The animals remained in individual cages, being given balanced feed and water *ad libitum.* The treated and control groups had no physical contact with one another at no time during the study. The first observation was at 24 and 48 hours after applying the product. Each of the animals was reinfested with 25 unfed adult fleas (Ctenocephalides felis) at 7, 14, 21, 35, 60, 90, 120, 150, 180 and 210 days. After each reinfestation, at 24 and 48 hours, the fleas were counted. The efficacy observed during the first 48 hours after applying the treatments exceeded 95% in group A and did not reach 80% in group B. In group A, the efficacy observed between days 8 and 152, both included, reached 100%. In group B, the efficacy observed between days 15 and 121, both included, remained between 95% and 98%; being under the value considered as effective on day 152. It is concluded that the plastic matrix collar impregnated with 10 g% propoxur, 4 g% deltamethrin and 1 g% ethyl butylacetylaminopropionate controls infestations and reinfestations with fleas *(Ctenocephalides felis),* reaching higher efficacy percentages during a greater time period than the one containing 4 g% deltamethrin.

### 2- Comparative efficacy of collars injected with 10 g% propoxur, 4 g% deltamethrin and 1 g% ethyl butylacetylaminopropionate versus collars injected with 4 g% del-tamethrin applied to canines experimentally infested with Rhipicephalus sanguineus.

The comparative efficacy between two injected plastic matrix ectoparasitic collars was evaluated in canines experimentally infested with ticks *(Rhipicephalus sanguineus*). One of the products contained 10 g% propoxur, 4 g% deltamethrin and 1 g% ethyl butylacetylaminopropionate (product A) and the other contained 4 g% deltamethrin (product B). 30 animals of both sexes, mixed breeds, of different ages were used. The dogs were mildly sedated in order to be experimentally infested with approximately 50 unfed adult ticks at a (1:1) male:female ratio. At 15 minutes it was found that at least 50% of the ectoparasites were fixed to the animal. The canines were randomly divided into 3 groups of 10 animals each and at 48 hours they were assigned the following treatments: group A: treated with a plastic matrix collar injected with 10 g% propoxur, 4 g% deltamethrin and 1 g% ethyl butylacetylaminopropionate; group B: treated with a plastic matrix collar injected with 4 % deltamethrin and group C: plastic matrix collar without insecticide (control). The animals remained in individual cages, being given balanced feed and water *ad libitum.* The treated and control groups had no physical contact with one another at no time during the study. The first evaluation was conducted at 48 hours after applying the product. Each of the animals was reinfested with 50 unfed adult ticks at a (1:1) male:female ratio at days: 7, 15, 30, 60, 90, 120, 150, 180, 195 and 210. The acaricide effect measured through the efficacy percentage was calculated at 9, 17, 32, 62, 92, 122, 152, 182, 197 and 212 days. The efficacy observed in the first 48 hours post-application exceeded 90% in group A and did not reach 65% in group B. In group A, the efficacy observed between days 9 and 197 remained between 98 and 100%. In group B, the efficacy observed between days 17 and 182 remained between 90% and 94%; on day 197 the efficacy was 86%. The plastic matrix collar impregnated with 10 g% propoxur, 4 g% deltamethrin and 1 g% ethyl butylacetylaminopropionate controls infestations and reinfestations with ticks *(Rhipicephalus sanguineus),* reaching higher efficacy percentages during a greater time period than the one containing 4 g% deltamethrin.

### 3- Anti-biting/anti-feeding effect and mortality of an insecticidal collar injected with 10 g% propoxur, 4 g% deltamethrin and 1 g% ethyl butylacetylaminopropionate against phlebotominae vectors of leishmaniasis in canines exposed in laboratory conditions.

The objective of the experimental assay was to evaluate the anti-biting/anti-feeding effect and the mortality of an insecticidal collar injected with 10 g% propoxur, 4 g% deltamethrin and 1 g% ethyl butylacetylaminopropionate against phlebotominae vectors of leishmaniasis in canines exposed in laboratory conditions for 36 weeks. 20 canines of both sexes, mixed breeds, of different ages were used. An insecticidal collar injected with 10 g% propoxur, 4 g% deltamethrin and 1 g% ethyl butylacetylaminopropionate were applied to ten (10) dogs. A collar without active ingredients was put on the remaining animals. The animals were exposed in individual nests measuring 1.8 meters high and of 1.2 square meters of surface area made of gauze and cotton, accessing through the base and one side. The phlebotominae used corresponded to *Lutzomya Longipalpis.* The observation frequency was: 24, 48, 72 and 96 hours, and at 4, 8, 12, 16, 20, 24, 30 and 36 weeks. 130-150 females and 30 males, 7 to 20 days of age, were placed in each nest thirty minutes before each observation. One sedated canine was then introduced per each nest and it was kept for two hours. After that time, the dogs were taken out of the nest and were brushed for the purpose of identifying a dead insect on the blanket. The dead insects found on the floor of the nest were swept up and placed in a suitable container identified with the number of the animal. The living insects were collected by aspiration and were kept in a suitable container identified with the number of the animal. At 2 and 20 hours of the start of each test they were counted and classified: fed females: alive and dead; unfed females and males: alive and dead. The anti-feeding effect was obtained by comparing the results obtained between the control and treated dogs, dividing the difference between the average number of insects that fed on the control and treated animals by the average number of the insects that fed on the control animals. In the treated animals, for a period of 36 weeks only 3.0% of the female *Lutzomya Longipalpis* recovered from the nests had fed. The anti-feeding effect was 97%. The mortality at 4 weeks reached 95% and at week 36 it reached 65%.

### 4- Comparative evaluation of the anti-biting/anti-feeding effect and of the mortality of an insecticidal collar injected with 10 g% propoxur, 4 g% deltamethrin and 1 g% ethyl butylacetylaminopropionate versus an insecticidal collar injected with 4 g% del-tamethrin against phlebotominae vectors of leishmaniasis in canines exposed in laboratory conditions.

The objective of the experimental assay was to comparatively evaluate the anti-biting/anti-feeding effect and the mortality between an insecticidal collar injected with 10 g% propoxur, 4 g% deltamethrin and 1 g% ethyl butylacetylaminopropionate and another collar injected with 4 g% deltamethrin against phlebotominae vectors of leishmaniasis in canines exposed in laboratory conditions for 36 weeks.

30 canines of both sexes, mixed breeds, of different ages were used. Each treated group Consisted of 10 animals. Treatments: A: insecticidal collar injected with 10 g% propoxur, 4 g% deltamethrin and 1 g% ethyl butylacetylaminopropionate; B: insecticidal collar injected with 4 g% deltamethrin and C: collar without active ingredients. The animals were exposed in individual nests measuring 1.8 meters high and of 1.2 square meters of surface area made of gauze and cotton, accessing through the base and one side. The phlebotominae used corresponded to *Lutzomya Longipalpis.* The observation frequency was: 24, 48, 72 and 96 hours, and at 4, 8, 12, 16, 20, 24, 30 and 36 weeks. 130-150 females and 30 males 7 to 20 days of age were placed in each nest thirty minutes before each observation. One sedated canine was then introduced per each nest and it was kept for two hours. After that time, the dogs were taken out of the nest and were brushed for the purpose of identifying a dead insect on the blanket. The dead insects found on the floor of the nest were swept up and placed in a suitable container identified with the number of the animal. The living insects were collected by aspiration and were kept in a suitable container identified with the number of the animal. At 2 and 20 hours of the start of each test they were counted and classified: fed females: alive and dead; unfed females and males: alive and dead. The anti-feeding effect was obtained by comparing the results obtained between the control and treated dogs, dividing the difference between the average number of insects that fed on the control and treated animals by the average number of the insects that fed on the control animals. Treatment A: for a period of 36 weeks only 2.0% of the female *Lutzomya Longipalpis* recovered from the nests had fed. The anti-feeding effect was 98%. The mortality at 4 weeks reached 97% and at week 36 it reached 68%. Treatment B: for a period of 36 weeks 9.0% of the female *Lutzomya Longipalpis* recovered from the nests had fed. The anti-feeding effect was 91%. The mortality at 4 weeks reached 92% and at week 36 it reached 42%.

### 5- Anti-biting/anti-feeding effect and mortality of an insecticidal collar injected with 10 g% propoxur, 4 g% deltamethrin and 1 g% ethyl butylacetylaminopropionate versus an insecticidal collar injected with 4 g% deltamethrin against Culex pipiens pipiens mosquitoes transmitting canine dirofilariasis for 8 (eight) months.

The objective of the experimental assay was to evaluate the anti-biting/anti-feeding effect and the mortality of two insecticidal collars against *Culex pipiens pipiens* mosquitoes transmitting canine dirofilariasis. Treatment A consisted of an insecticidal collar injected with 10 g% propoxur, 4 g% deltamethrin and 1 g% ethyl butylacetylaminopropionate, the insecticidal collar corresponding to treatment B contained 4 g% deltamethrin and a plastic collar without repellant or insecticides was put on the animals that were part of treatment C. 30 (thirty) canines of both sexes, mixed breeds, of different ages, 10 (ten) animals per treatment, were used. The antibiting/anti-feeding effect and mortality were measured at 24 and 48 hours, at week 1 and at weeks 2, 4, 8, 12, 16, 20, 24, 28 and 32. Each sedated dog was exposed for 90 minutes to 50 unfed female *Culex pipiens pipiens* obtained in a laboratory in a suitably made net. After that time, the animal was removed from the net and brushed for the purpose of identifying a dead insect on the blanket. The dead insects found on the floor of the nest were picked up and were placed in a suitable container identified with the number of the animal. The living insects were collected by aspiration and were kept in a suitable container identified with the number of the animal being fed with water/honey. The anti-feeding effect and mortality were observed at 24 and 48 hours. They were counted and classified: fed females: alive and dead; unfed females: alive and dead. The anti-feeding effect was obtained by the calculation obtained from the ratio of the difference between the anti-feeding rate in the treated and control animals divided by the difference obtained between 1 and the anti-feeding rate in the control animals. Mortality was obtained by the calculation obtained from the ratio of the difference of the mortality rate in the treated dogs and the mortality rate in the control animals divided by the difference between 1 and the mortality rate in the control animals. Anti-feeding effect: Treatment A: 98 and 100% during the 32 weeks; treatment B: 92 and 97% during the first 28 weeks, 89% at week 32. Mortality: Treatment A: 85 and 96% up to week 28, 92% at week 32; treatment B: 63 and 85% up to week 28, 70% at week 32. The values relating both to the anti-biting/anti-feeding effect and to mortality against *Culex pipiens pipiens* mosquitoes transmitting canine dirofilariasis obtained by using an insecticidal collar injected with 10 g% propoxur, 4 g% deltamethrin and 1 g% ethyl butylacetylaminopropionate exceeded those found when using an insecticidal collar injected with 4 g% deltamethrin during the 32 weeks in which the assay was conducted.

## Claims

1. A controlled-release pesticide composition comprising a polymer matrix of polyvinyl chloride, **characterized in that** it comprises a pyrethroid at a concentration of 1-10%, propoxur at a concentration of 5-20%, another insect repellant compound which is not pyrethroid, triphenyl phosphate at a concentration of 5-30% and cresyl diphenyl phosphate at a concentration of 5-30%.

2. A composition according to claim 1, wherein the pyrethroid is deltamethrin.

3. A composition according to any of the claims 1 to 2, wherein the insect repellant compound which is not pyrethroid is at a concentration of 0,1-5%.

4. A composition according to claim 3, wherein the insect repellant compound which is not pyrethroid is ethyl butylacetylaminopropionate.

5. A composition according to any of the claims 1 to 4, wherein it further comprises isooctyl phthalate at a concentration of 5-15%.

6. A controlled-release pesticide system, **characterized in that** it comprises a polymer matrix of polyvinyl chloride which is injection molded or mixed with the ingredient composition of any of the previous claims.

7. The system of claim 6, wherein it is in the form of a dog collar or other similar devices.

8. The system of claim 7, wherein the polyvinyl chloride is at a concentration of 40-50%.

9. Use of a composition according to any claims 1 to 6 , as an insecticide for controlling fleas and ticks, repelling and fighting phlobotominae vectors of leishmaniasis and mosquito vectors of dirofilariasis.

## Patentansprüche

1. Pestizidzusammensetzung mit kontrollierter Freisetzung umfassend eine Polymermatrix aus Polyvinylchlorid, **dadurch gekennzeichnet, dass** es ein Pyrethroid in einer Konzentration von 1 bis 10%, Propoxur in einer Konzentration von 5 bis 20%, eine andere Insektenschutzmittel-Verbindung, welche nicht Pyrethroid ist, Triphenylphosphat in einer Konzentration von 5 bis 30%, und Cresyldiphenylphosphat in einer Konzentration von 5 bis 30% umfasst.

2. Zusammensetzung nach Anspruch 1, wobei das Pyrethroid Deltamethrin ist.

3. Zusammensetzung nach einem der Ansprüche 1 bis 2, wobei die Insektenschutzmittel-Verbindung, welche nicht Pyrethroid ist, in einer Konzentration von 0,1 bis 5 % vorhanden ist.

4. Zusammensetzung nach Anspruch 3, wobei die Insektenschutzmittel-Verbindung, welche nicht Pyrethroid ist, Ethylbutylacetylaminopropionat ist.

5. Zusammensetzung nach einem der Ansprüche 1 bis 4, wobei sie ferner Isooctylphtalat in einer Konzentration von 5 bis 15% umfasst.

6. Pestizidsystem mit kontrollierter Freisetzung, **dadurch gekennzeichnet, dass** es eine Polymermatrix aus Polyvinylchlorid umfasst, welche spritzgegossen oder mit der Wirkstoffzusammensetzung nach einem der vorhergehenden Ansprüche gemischt ist.

7. System nach Anspruch 6, wobei die Form eines Hundehalsbands oder ähnlicher Vorrichtungen aufweist.

8. System nach Anspruch 7, wobei das Polyvinylchlorid in einer Konzentration von 40 bis 50 % vorhanden ist.

9. Verwendung einer Zusammensetzung nach einem der Ansprüche 1 bis 6 als Insektizid zum Bekämpfen von Flöhen und Zecken, zum Abwehren und Bekämpfen von *Phlebotominae,* Vektoren der Leishmaniose, und Moskitos, Vektoren der Dirofilariose.

## Revendications

1. Composition de pesticide à libération contrôlée comprenant une matrice polymère de chlorure de polyvinyle, **caractérisée en ce qu'**elle comprend un pyréthrinoïde à une concentration de 1-10 %, le propoxur à une concentration de 5-20 %, un autre composé insectifuge qui n'est pas le pyréthrinoïde, le phosphate de triphényle à une concentration de 5-30 % et le phosphate de crésyle et de diphényle à une concentration de 5-30 %.

2. Composition selon la revendication 1, dans laquelle le pyréthrinoïde est la deltaméthrine.

3. Composition selon l'une quelconque des revendications 1 à 2, dans laquelle le composé insectifuge qui n'est pas le pyréthrinoïde est à une concentration de 0,1-5 %.

4. Composition selon la revendication 3, dans laquelle le composé insectifuge qui n'est pas le pyréthrinoïde est le butylacétylaminopropionate d'éthyle.

5. Composition selon l'une quelconque des revendications 1 à 4, dans laquelle elle comprend en outre le phtalate d'isooctyle à une concentration de 5-15 %.

6. Système de pesticide à libération contrôlée, **caractérisé en ce qu'**il comprend une matrice polymère de chlorure de polyvinyle qui est moulée ou mélangée par injection avec la composition des ingrédients selon l'une quelconque des revendications précédentes.

7. Système selon la revendication 6, dans lequel il a une forme de collier pour chien ou autres dispositifs similaires.

8. Système selon la revendication 7, dans lequel le chlorure de polyvinyle est à une concentration de 40-50 %.

9. Utilisation d'une composition selon l'une quelconque des revendications 1 à 6, comme insecticide pour contrôler les puces et les tiques, repousser et lutter contre les *phlebotominae* vecteurs de la leishmaniose et les moustiques vecteurs de la dirofilariose.
